# EUROPEAN PATENT APPLICATION

(11) **EP 3 065 118 A1**
(43) Date of publication of application: **07.09.2016**
(21) Application number: 15168156.6
(22) Date of filing: 19.05.2015
(51) Int. Cl.: G08G 5/00, B64D 45/00, G07C 5/00

(54) **REAL-TIME FLIGHT INFORMATION BACKUP SYSTEM AND METHOD THEREOF**

(30) Priority: 03.03.2015 TW 104106570
(71) Applicant: Aircom Pacific Inc, San Jose, CA 95113 (US)
(72) Inventor: Shih, Daniel, Dublin, CA 94568 (US)
(74) Representative: Arpe Fernandez, Manuel de

(57) **Abstract**

A real-time flight information backup system and method thereof are disclosed. A flight data collector is disposed in a flying machine. The flight condition parameters of the flying machine are collected during the flight. The important black box records of the flight condition parameters are captured by a flight data recorder. The cockpit voice records are recorded by a cockpit voice recorder. The flight condition parameters, the black box records and the cockpit voice records are extracted by a flight record retriever and stored in a temporary memory. The above flight records are encoded by an encoder to form a backup flight data. The backup flight data is sent to a communication satellite by an antenna of a wireless network transmitter. The backup flight data is sent to a network base station by the communication satellite and stored in a backup server.

## Description

### CROSS-REFERENCE TO RELATED APPLICATION

This application claims priority from Taiwan Patent Application No. 104106570, filed on March 03, 2015, in the Taiwan Intellectual Property Office, the content of which are hereby incorporated by reference in their entirety for all purposes.

### BACKGROUND OF THE INVENTION

### 1. Field of the Invention

This application relates to a real-time flight information backup system and method thereof, and more particularly, to the backup system and method with wireless real-time transmission of the flight information during the flight.

### 2. Description of the Related Art

Due to flight safety, it is currently regulated that a flight data recorder, which is commonly known as a black box, must be installed for any aircrafts over a certain size. Even though the flight data recorder is commonly referred to as the "black" box, the exterior of the flight data recorder is often colored in a striking red or orange tone for easier find during search or rescue operations. The flight data recorder normally records data information with various status during the flight and stored the data on a magnetic tape or solid state disk with special coding. After retrieving the relevant information from the device, one can decode the data to learn what the aircraft has encountered during the flight when the flight data recorder was recording. As a result, the potential causes in an accident can be determined.

When there is a need to search for the flight data recorder, it often indicates that the aircraft has crashed or an accident has happened. In most scenarios, the crash is accompanied with massive impact or explosion, so the structural design of the flight data recorder must be shock proof and fire resistant. Taken into consideration that the majority of aviation accidents happen over the oceans, the flight data recorder must also be corrosion-resistant to avoid being damaged by sea water. Regardless of the advancement of the flight data recorder design and the continual improvement on the strength of its material, the past records showed that a large number of the flight data recorders were damaged and unreadable after the accidents, or even failed to be located. For this reason, how to effectively store relevant in-flight data will be beneficial to deduce the cause of aviation crashes and prevent it from happening again.

As a result, to solve the problem stated above, the present invention will not only add more flight data recorders for increasing the number of the storage device, but also focus on real-time flight information backup system and the method thereof. After years of careful studies and research, the present invention shows great improvement on what is currently lacking in the technology, and helps to better the application in the industry.

### SUMMARY OF THE INVENTION

In view of the above-mentioned technical problems, the objective of the present invention provides a system and a method of real-time flight information backup which is aimed to solve the drawback with a damaged or unreadable flight data recorder; the present invention will then advance flight safety.

In accordance to one objective of the present invention, a system of real-time flight information backup is provided, which may include a flight data collector, a flight data recorder, a cockpit voice recorder, a flight record retriever and a wireless network transmitter. The flight data collector is disposed in a flying machine. The flight condition parameters of the flying machine are collected during the flight. The flight condition parameters include a dashboard displaying data and a sensor detecting data. The flight data recorder is connected to the flight data collector. The important black box records of the flight condition parameters are captured and stored in the flight data recorder. The cockpit voice recorder is disposed in the flying machine. The cockpit voice records of crew members are recorded by the cockpit voice recorder during the flight. The flight record retriever is connected to the flight data collector, the flight data recorder and the cockpit voice recorder respectively. The flight condition parameters, the black box records and the cockpit voice records are extracted and stored in a temporary memory, and encoded by an encoder so as to form a backup flight data. The wireless network transmitter is connected to the flight record retriever. The backup flight data is sent to a communication satellite by an antenna. Wherein, the backup flight data is sent to a network base station by the communication satellite and stored in a backup server.

Preferably, the flight condition parameters may include the time, the speed, the heading, the altitude, the engine rotation speed, the fuselage balance, the aerofoil position, the cabin temperature or the cabin pressure.

Preferably, the cockpit voice records may include the dialogue between the pilot and the tower, the dialogue between the pilots, the broadcast from the crew members or the environment sound inside the cabin.

Preferably, the flight record retriever may further connect to a monitor. The monitor shooting a preset area to obtain a surveillance video, the surveillance video is sent to the communication satellite by the antenna, then sent to the network base station and stored in the backup server.

Preferably, the wireless network transmitter may use Ku-band or Ka-band of microwave frequencies to send the flight information to the communication satellite.

In accordance with another objective of the present invention, a method of real-time flight information backup is provided, which may include the following steps. The flight condition parameters of a flying machine are collected during the flight by a flight data collector disposed in the flying machine, the flight condition parameters include a dashboard displaying data and a sensor detecting data; the important black box records of the flight condition parameters are captured by a flight data recorder connected to the flight data collector and are stored in the flight data recorder; the cockpit voice records of crew members are recorded by a cockpit voice recorder disposed in the flying machine; the flight condition parameters, the black box records and the cockpit voice records are extracted by a flight record retriever connected to the flight data collector, the flight data recorder and the cockpit voice recorder respectively, and are stored in a temporary memory, a backup flight data is formed by encoding the flight data with an encoder; the backup flight data is sent to a communication satellite by an antenna of a wireless network transmitter; and the backup flight data is sent to a network base station by the communication satellite and stored in a backup server.

According to the aforementioned description, a system and a method of real-time flight information backup disclosed in the present invention may have one or more advantages as follows.

(1) A system and a method of real-time flight information backup in accordance with the present invention may use the technology of satellite wireless network transmission to increase the wireless transmission distance, so that the backup flight data is sent back to the ground by the communication satellite.

(2) A system and a method of real-time flight information backup in accordance with the present invention may use the technology of satellite wireless network transmission to send the real-time backup flight data to the ground server, so that the influence of the lost or damage flight data recorder may be reduced.

(3) A system and a method of real-time flight information backup in accordance with the present invention may send and store the data with special coding, so that the data of the flight information would not be stolen or cracked during the flight. Thus the flight safety may be enhanced.

### BRIEF DESCRIPTION OF THE DRAWINGS

FIG. 1 is a block diagram of a real-time flight information backup system of the present invention.
FIGS. 2 is a schematic diagram of another wireless network transmitter of the present invention.
FIG. 3 is a schematic diagram of a real-time flight information backup system of the present invention.
FIG. 4 is a flow diagram for showing a method of real-time flight information backup of the present invention.

### DETAILED DESCRIPTION OF THE PREFERRED EMBODIMENTS

Hereinafter, embodiments of the present invention will be described in detail with reference to the accompanying drawings so that those skilled in the art to which the present invention pertains can realize the present invention. As those skilled in the art would realize, the described embodiments may be modified in various different ways, all without departing from the spirit or scope of the present invention.

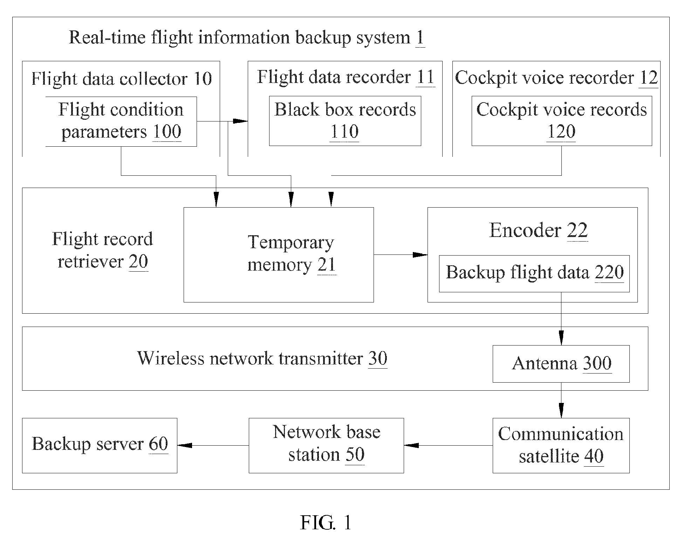

Please refer to FIG. 1 which is a block diagram of a real-time flight information backup system of the present invention. As shown in the figure, the real-time flight information backup system 1 includes a flight data collector 10, a flight data recorder 11, a cockpit voice recorder 12, a flight record retriever 20, a wireless network transmitter 30, a communication satellite 40, a network base station 50 and a backup server 60. Among the above devices, the flight data collector 10, the flight data recorder 11, the cockpit voice recorder 12, the flight record retriever 20, and the wireless network transmitter 30 are disposed in a flying machine. The flying machine referred to herein may include an aircraft with fixed wings or a rotorcraft, such as airplane or helicopter. The flight data collector 10 is disposed in the flying machine for collecting the flight data. The flight data collector 10 may be disposed in the electronic cabin of the flying machine for collecting all the flight condition parameters 100 of the flying machine. The flight condition parameters 100 referred to all the data displayed on the dashboard of the pilot cabin and the data information detected by various sensors of the flying machine, for instance the dashboard displaying data may include the altitude of the flying machine corresponded to the flight time, the flight speed, the flight heading and so on. The sensor detecting data may include the engine rotation speed of the flying machine, the adjustment of the aerofoil position, the fuselage balance, the cabin temperature, the cabin pressure and so on. All data information is included in the flight condition parameters 100.

In accordance with the regulations, the flight data recorder 11, which is commonly known as a black box, must be equipped for any aircrafts over a certain size. The important flight condition parameters 100 are captured by the flight data recorder 11 and stored in the flight data recorder 11 as the black box records 110. The flight condition parameters 100 are mostly belonged to common data information. If the storage media is the memory of a conventional computer, the storage device may not be able to meet the requirements of shock proof and fire resistant. Therefore, the important black box records 110 will be encoded by the special serial communication standard and stored in the memory of the flight data recorder 11. The earliest memory for storing the encoded data may be the magnetic tape. Recently, the mostly use of the memory for storing data is the solid state disk. The encoding method may vary according to the different airline's company. When the flight data recorder 11 is found in the event of an accident, the black box records 110 must be decoded in different ways, and then the data may be converted into readable information. Although the greater storage capacity is available by using the solid state disk, a large number of the flight condition parameters 100 are still unable to be stored. Thus, the method of backup the flight condition parameters 100 are more important.

Furthermore, the cockpit voice records 120 of crew members are recorded by the cockpit voice recorder 12 during the flight. The cockpit voice records 120 may be the sound information that appears in the cabin of the flying machine, for instance dialogue between the pilot and the tower, the dialogue between the captain and the copilot, the broadcast from the crew members or the alarm sound occurred in the pilot cabin. The above cockpit voice records 120 are belonged to the general format of the sound signals. If the storage media is the memory of the conventional computer, the storage device may also have the same issue of shock proof and fire resistant. Therefore, the sound signals will also be encoded by the special encoding method and then stored in the memory of the cockpit voice recorder 12. The memory of the cockpit voice recorder 12 may be the same kind of memory of the flight data recorder 11. Similarly, the data volumes of the cockpit voice records 120 are huge. Even if the sound signals are encoded, only the most recent period voice record can be stored and the records over a preset time period will be covered by other records. Thus, if the backup of all the cockpit voice records 120 can be achieved instantly, the more complete flight information can be obtained.

The present invention disclosed the flight record retriever 20 disposed in the electronic cabin of the flying machine, which is used to backup the flight condition parameters 100. The flight record retriever 20 is connected to the flight data collector 10. The flight data can be transmitted by using the cable connection or the wireless communication. A temporary memory 21 is included in the flight record retriever 20. The temporary memory 21 could be the solid state disk, or the general hard drive disc. The flight condition parameters 100, which are collected by the flight data collector 10, can be extracted and stored in a temporary memory 21. Besides, the flight record retriever 20 is connected to the flight data recorder 11 and the cockpit voice recorder 12. The black box records 110 and the cockpit voice records 120 may be extracted and stored in a temporary memory 21. The above stored data is encoded by an encoder 22 for forming a backup flight data 220 during the flight. The backup flight data 220 is sent to a communication satellite 40 by using an antenna 300 of the wireless network transmitter 30. The wireless network transmitter 30 may use Ku-band or Ka-band of microwave frequencies for sending the flight information to the communication satellite 40. Due to strong transmission, and a wide range of satellite coverage, the above transmitting frequencies are suitable for transmitting a large number of the backup flight data 220. After receiving the backup flight data 220 by the communication satellite 40, the backup flight data 220 is sent back to a network base station 50 and stored in a backup server 60.

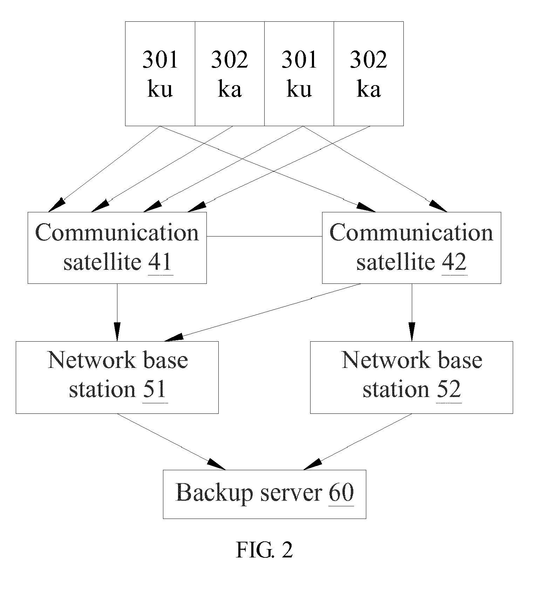

Please refer to FIG. 2 which is a schematic diagram of another wireless network transmitter of the present invention. As shown in the figure, the antenna of the wireless network transmitter can be set as an antenna array. A plurality of the Ku-band antenna 301 and a plurality of the Ka-band antenna 302 are included in the antenna array. The flight data information is transmitted by different frequencies. A large number of the flight condition parameters, the black box records and the cockpit voice records are stored in the temporary memory. The flight information can be cut or be classified in part, and then transmitted by the Ku-band antenna 301 and the Ka-band antenna 302 respectively. According to the transmitting status, the flight data can also be transmitted by only one of the band antenna. During the transmission process, the Ku-band antenna 301 and the Ka-band antenna 302 may correspond to the same or different communication satellite 41, 42. For example, the communication satellite 41 may receive data from both Ku-band and Ka-band, but the communication satellite 42 may only receive data from Ku-band. The data volume of the transmission may be dispersed by using different communication satellite. Adding the number of the communication satellite may also increase the bandwidth of the transmission. After that, the flight data is sent back to the network base station 51, 52 on the ground by different communication satellite 41, 42. Due to the different communication satellite 41, 42, the corresponding network base station 51, 52 on the ground may be different. Although the partial flight data is received by the different network base station 51, 52, the partial flight data can be sent to a single backup server 60. All partial flight data is reorganized into the raw flight data and stored in the backup server 60.

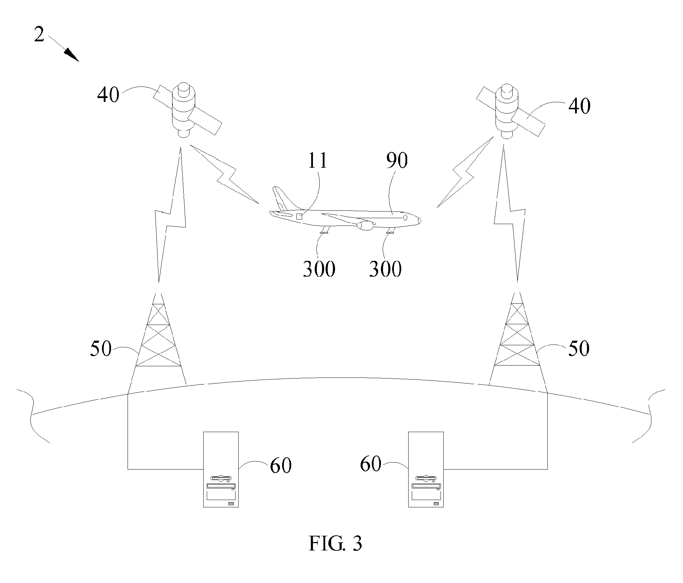

Please refer to FIG. 3 which is a schematic diagram of a real-time flight information backup system of the present invention. As the figure shows that the flying machine may be an aircraft 90 for carrying passengers or goods. When the aircraft 90 flying in the sky, the related flight information is stored by the flight data recorder 11. Although the flight data recorder 11 is disposed in the tail of the aircraft 90, which is less likely been hit in the accident. The flight data recorder 11 may still be damaged and unreadable. Therefore, the embodiment of the present invention discloses an antenna 300 disposed in the aircraft 90. The backup flight data is sent to the communication satellite 40 instantly, and then sent back to the network base station 50 on the ground. The backup flight data is stored in the backup server 60, which is connected to the network base station 50. The backup server 60 may set up at the machine room of the airline company. A huge storage database is included in the backup server 60, so that the flight information of every flight can be recorded. Since building the machine room and the big storage database on the ground are easier than on the flying machine, the complete backup flight data may be easily stored on the backup server. A monitor may further be disposed in the flying machine. A surveillance video is obtained by shooting a preset area with the monitor. The surveillance video is sent to the communication satellite by the antenna, and then sent to the network base station and stored in the backup server. The image information is not easily stored in the conventional flight data recorder due to the big data volume. However, the real-time flight information backup system didn't have such problems. The surveillance video may send back to the ground server and reach the real-time monitoring function. The early detection of the abnormal in the flying machine may reduce the probability of the occurrence of the flight accident.

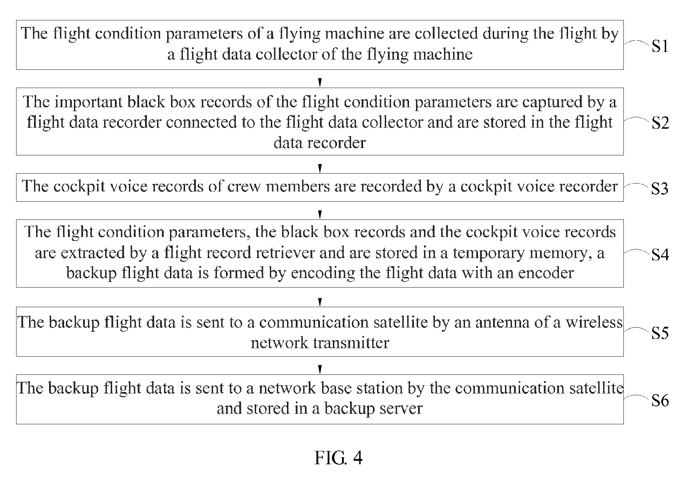

Please refer to FIG. 4 which is a flow diagram of a real-time flight information backup method of the present invention. As shown in the figure, the method includes the following steps. Step S1: The flight condition parameters of a flying machine are collected during the flight by a flight data collector of the flying machine. Step S2: The important black box records of the flight condition parameters are captured by a flight data recorder connected to the flight data collector and are stored in the flight data recorder. Step S3: The cockpit voice records of crew members are recorded by a cockpit voice recorder. Step S4: The flight condition parameters, the black box records and the cockpit voice records are extracted by a flight record retriever and are stored in a temporary memory, a backup flight is formed by encoding the flight data with an encoder. Step S5: The backup flight data is sent to a communication satellite by an antenna of a wireless network transmitter. Step S6: The backup flight data is sent to a network base station by the communication satellite and stored in a backup server.

According to the aforementioned steps shown in the flow chart, the flight data collector is disposed in the flying machine. The flight condition parameters include the data displayed on the dashboard, such as the flight altitude, the flight speed or the flight heading, and the data information detected by various sensors of the flying machine, such as the engine rotation speed of the flying machine, the adjustment of the aerofoil position, the fuselage balance, the cabin temperature, the cabin pressure and so on. Among these parameters, the important information will be encoded and stored as the black box records. In addition, the cockpit voice records may be the sound information that appears in the cabin of the flying machine, for instance dialogue between pilot and tower, dialogue between captain and copilot, broadcast from the crew members or alarm sound occurred in the pilot cabin. In order to backup the flight information, the flight record retriever is connected to the flight data collector, the flight data recorder and the cockpit voice recorder respectively. The flight condition parameters, the black box records and the cockpit voice records are extracted by a flight record retriever and stored in the temporary memory. The backup flight data is formed by encoding the flight data with an encoder. The backup flight data is sent to a communication satellite by the antenna of the wireless network transmitter; and the backup flight data is sent to a network base station by the communication satellite and stored in a backup server.

While the means of specific embodiments in present invention has been described by reference drawings, numerous modifications and variations could be made thereto by those skilled in the art without departing from the scope and spirit of the invention set forth in the claims. The modifications and variations should in a range limited by the specification of the present invention.

## Claims

1. A real-time flight information backup system, comprising:
a flight data collector (10) disposing in a flying machine (90), collecting flight condition parameters (100) of the flying machine (90) during the flight, the flight condition parameters (100) comprising a dashboard displaying data and a sensor detecting data;
a flight data recorder (11) connecting to the flight data collector (10), capturing important black box records (110) of the flight condition parameters (100) and storing in the flight data recorder (11);
a cockpit voice recorder (12) disposing in the flying machine (90), recording cockpit voice records (120) of crew members during the flight;
a flight record retriever (20) connecting to the flight data collector (10), the flight data recorder (11) and the cockpit voice recorder (12) respectively, extracting the flight condition parameters (100), the black box records (110) and the cockpit voice records (120), and storing in a temporary memory (21), and encoding by an encoder (22) so as to form a backup flight data (220); and
a wireless network transmitter (30) connecting to the flight record retriever (20), sending the backup flight data (220) to a communication satellite (40, 41, 42) by an antenna (300);
wherein, the backup flight data (220) is sent to a network base station (50, 51, 52) by the communication satellite (40, 41, 42) and stored in a backup server (60).

2. The real-time flight information backup system of claim 1, wherein the flight condition parameters (100) comprises times, speed, heading, altitude, engine rotation speed, fuselage balance, aerofoil position, cabin temperature or cabin pressure.

3. The real-time flight information backup system of claim 1, wherein the cockpit voice records (120) comprises dialogue between pilot and tower, dialogue between pilots, .broadcast from the crew members or environment sound inside the cabin.

4. The real-time flight information backup system of claim 1, further comprising a monitor connecting to the flight record retriever (20), the monitor shooting a preset area to obtain a surveillance video, the surveillance video being sent to the communication satellite (40, 41, 42) by the antenna (300), then being sent to the network base station (50, 51, 52) and being stored in the backup server (60).

5. The real-time flight information backup system of claim 1, wherein the wireless network transmitter (30) uses Ku-band (301) or Ka-band (302) of microwave frequencies to send the flight information to the communication satellite (40, 41, 42).

6. A method of real-time flight information backup, comprising:
collecting flight condition parameters (100) of a flying machine (90) during the flight by a flight data collector (10) disposed in the flying machine (90), the flight condition parameters (100) comprising a dashboard displaying data and a sensor detecting data;
capturing important black box records (110) of the flight condition parameters (100) by a flight data recorder (11) connected to the flight data collector (10) and storing the black box records (110) in the flight data recorder (11);
recording cockpit voice records (120) of crew members by a cockpit voice recorder (12) disposed in the flying machine (90);
extracting the flight condition parameters (100), the black box records (110) and the cockpit voice records (120) by a flight record retriever (20) connected to the flight data collector (10), the flight data recorder (11) and the cockpit voice recorder (12) respectively, and storing the flight data in a temporary memory (21), and forming a backup flight data (220) by encoding the flight data with an encoder (22);
sending the backup flight data (220) to a communication satellite (40, 41, 42) by an antenna (300) of a wireless network transmitter (30); and
sending the backup flight data (220) to a network base station (50) by the communication satellite (40, 41, 42) and storing the backup flight data (220) in a backup server (60).

7. The method of real-time flight information backup of claim 6, wherein the flight condition parameters (100) comprises times, speed, heading, altitude, engine rotation speed, fuselage balance, aerofoil position, cabin temperature or cabin pressure.

8. The method of real-time flight information backup of claim 6, wherein the cockpit voice records (120) comprises dialogue between pilot and tower, dialogue between pilots, .broadcast from the crew members or environment sound inside the cabin.

9. The method of real-time flight information backup of claim 6, further comprising:
shooting a preset area to obtain a surveillance video by a monitor connected to the flight record retriever (20), the surveillance video being sent to the communication satellite (40, 41, 42) by the antenna (300), then being sent to the network base station (50, 51, 52) and being stored in the backup server (60).

10. The method of real-time flight information backup of claim 6, wherein the wireless network transmitter (30) uses Ku-band (301) or Ka-band (302) of microwave frequencies to send the flight information to the communication satellite (40, 41, 42).
